# EUROPÄISCHE PATENTANMELDUNG

(11) **EP 2 570 821 A1**
(43) Veröffentlichungstag der Anmeldung: **20.03.2013**
(21) Anmeldenummer: 12183176.2
(22) Anmeldetag: 05.09.2012
(51) Int. Cl.: G01S 17/74, G01S 7/00, F41G 1/00

(54) **Vorrichtung und Verfahren zur Identifizierung und Kommunikation**

(30) Priorität: 19.09.2011 DE 102011113644
(71) Anmelder: Rheinmetall Soldier Electronics GmbH, 78333 Stockach (DE)
(72) Erfinder: Drescher, Thomas, 88662 Überlingen (DE)
(74) Vertreter: Dietrich, Barbara

(57) **Zusammenfassung**

Vorgeschlagen wird eine, bevorzugt am Körper tragbare Vorrichtung (1, 1') mit einer gezielten Richtwirkung in Kombination mit einer störungsarmen Kommunikation. Die Vorrichtung (1, 1') vereint dabei optische Sichtmittel und / oder Zielvorrichtungen (3-7), die auf ein Objekt (14, X1-X5, Y1- Y10) gerichtet werden können mit einem Emitter, um damit Funktionen wie Entfernungsmessungen, Identifizierungen, Zielmarkierungen, Zielbeleuchtungen etc. durchzuführen und / oder Funktionen am Zielobjekt auszulösen, sowie eine optische Kommunikationsmöglichkeit, bei der beispielsweise mittels kodierten Lasersignalen Sprache und / oder Daten übermittelt werden. So können die mittels optischer Sichtmittel und / oder Zielvorrichtungen mit gekoppeltem Emitter ermittelten Ergebnisse gleichzeitig signalisiert oder in einer anderen Art und Weise kommuniziert werden.

## Beschreibung

Die Erfindung betrifft eine, bevorzugt am Körper tragbare Vorrichtung mit einer gezielten Richtwirkung in Kombination mit einer störungsarmen informationsübertragung. Die Vorrichtung vereint dabei optische Sichtmittel und / oder Zielvorrichtungen, die auf ein Objekt gerichtet werden können mit einer optischen informationsübertragung. Die Informationsübertragung erfolgt dabei beispielsweise mittels kodierten Lasersignalen Daten, um damit Funktionen, Entfernungsmessungen, Identifizierungen, Zielmarkierungen, Zielbeleuchtungen etc. durchzuführen. So können mit Hilfe optischer Sichtmittel oder Zielvorrichtungen gerichtet, Informationen übertragen und Ergebnisse signalisiert werden. Selbstverständlich ist auch die Übertragung offener und / oder kodierter Sprache mit der Vorrichtung angedacht.

Vor allem bei Polizei- oder Militäreinsätzen ist die Informationsübertragung zwischen den Teilnehmern bzw. Einsatzkräften notwendig, um sich beispielsweise bezüglich der Lage zu orientieren, während des Einsatzes abzustimmen und / oder auch vor Gefahren warnen zu können. In anderen Überwachungsaufgaben ist es wichtig, Berechtigte von Unberechtigten unterscheiden zu können. Dazu dient die genannte Erfindung ebenfalls.

Die DE 197 34 143 A1 offenbart eine Einrichtung zum Informieren von Personen über beispielsweise eine kurz bevorstehende Gefahrensituation. Die Übermittlung erfolgt dabei mittels Funk. Nachteilig ist, dass diese Übertragungstrecken leicht störanfällig sind, da sie ungerichtet sind. Die Störungen können einerseits durch die Umgebung bedingt sein, andererseits bewusst hervorgerufen worden sein.

So ist aus der DE 27 37 577 C1 ein militärische Radar- oder Funk- Nachrichtenübertragungssystem bekannt, das mobile Sende- Empfangsgeräte umfasst und zielgerichtet stört. Dieses nach dem Frequenzsprungverfahren arbeitende System unterscheidet sich gegenüber anderen dieser Art dadurch, dass der Sender während eines Zeitabschnittes, in dem dieser nicht zur Nutzsignalübertragung genutzt wird, als Störer arbeitet, um so die Kommunikation der nicht zum eigenen Kommunikationssystem gehörenden Geräte zu unterbinden, zumindest aber zu erschweren.

Um trotz dieser Störungen miteinander kommunizieren zu können, schlägt beispielsweise die DE 103 18 457 A1 ein Verfahren zur störungsfreien Kommunikation beim Betrieb eines Störers vor. Dabei werden für das Kommunizieren und Senden der Teilnehmer des eigenen Kommunikationssystems untereinander sogenannte Zeitfenster im Störmuster festgelegt bzw. definiert, die nur die eigenen Teilnehmergeräte kennen.

Derartige Maßnahmen und Gegenmaßnahmen sind technisch sehr aufwändig.

Hier stellt sich die Erfindung die Aufgabe, eine einfache Möglichkeit für eine gerichtete Informationsübertragung mit Signalisierung aufzuzeigen.

Gelöst wird die Aufgabe durch die Merkmale des Patentanspruchs 1 bezüglich der Vorrichtung und PAtentanspruchs 12 bezüglich des Verfahrens. Vorteilhafte Ausgestaltungen sind in den Unteransprüchen aufgezeigt.

Der Erfindung liegt der Gedanke zugrunde, dass es bei bestimmten Anwendungen von Vorteil ist, wenn die Informationsübertragung durch andere Medien als durch Funksignale erfolgt und diese gerichtet sind. Insbesondere im Nahbereich bieten sich dabei Vorrichtungen an, die nur eine freie Sichtlinie zueinander benötigen und Informationen optisch übertragen. Derartige Übertragungssysteme sind für Störungen weniger anfällig.

Bekannt ist, dass neben einer funktechnischen Kommunikation zwischen z.B. den Einsatzkräften auch Mittel zur Aufklärung und / oder Identifikation eingesetzt werden. Dabei werden häufig optische Zielmittel verwendet, die zusammen mit einer Visiervorrichtung insbesondere bei Handfeuerwaffen an der Waffe angebracht sind (DE 10 2007 037 389 A1). Ein ebenfalls an der Waffe befestigbares Laserlicht- Modul benennt unter anderem die DE 10 2006 025 246 A 1.

Den Grundgedanken einer optischen Informationsübertragung auffassend ist nunmehr vorgesehen, mit bekannten und in der Regel bereits vorhandenen optischen Zielmittel(n) auch eine insbesondere optische Informationsübertragung vorzunehmen, d.h., ein kombiniertes optisches Ziel- und Übertragungsmittel zu schaffen. Das hat den Vorteil, dass beim Richten auf das Zielobjekt auch gleichzeitig eine / die Informationsübertragung stattfinden kann.

Dazu ist vorgesehen, dass die zur Kommunikationsgruppe bzw. dem Kommunikationssystem zugehörenden oder eben die berechtigten Personen zumindest mit Mitteln für eine optische Informationsübertragung, genannt Abfrager, ausgerüstet sind und dazu wenigstens einen Empfänger, genannt Antworter, aufweisen. Vom Abfrager werden Signale dann im sichtbaren, infraroten oder ultravioletten Frequenzbereich ausgesandt, am anderen Objekt bzw. an einer anderen Person mit dem Empfänger (Antworter) empfangen und dort z.B. Funktionen wie Aktivierung, Identifikation und / oder Rückmeldung ausgelöst.

Zur Auslösung der Funktion wird / werden das / die Zielmittel etc. vorab auf das Ziel ausgerichtet. Das Ausrichten auf ein Objekt bzw. eine Person erfolgt beispielsweise dadurch, dass die Einsatzkraft oder eine sonstige Person durch ein Ziel- oder Beobachtungsmittel, beispielsweise direkt (Fernglas, Zielsucher, Kamera etc.) sieht, oder dass beispielsweise ein Laserpunkt auf dem anderen Objekt / der fremden Person erscheint, etc. Mit so auf das Objekt ausgerichteten Sichtmitteln / Zielvorrichtungen können damit gekoppelte Emitter beispielsweise Entfernungsmessungen, Identifizierungen, Zielmarkierungen, Zielbeleuchtungen etc. sowie bei geeigneter Gegenstelle mit entsprechenden Einrichtungen Sprach- / Datenübermittlung und Funktionsauslösungen beim anvisierten Objekt (Antworter) auslösen.

Für die Informationsübertragung wird ein bevorzugt gepulster und / oder kodierter Laser- oder Lichtstrahl von einem Abfrager auf das andere Objekt bzw. die andere Person gerichtet. Treffen diese einen Antworter und entsprechen die eingehenden Signale einem definierten Muster, werden akustische und / oder optische Signale und / oder Funksignale und / oder drahtgebundene Signale aus- bzw. zurückgesandt. Auf jeden Fall ist vorgesehen, dass die Funktion(en) am Gegengerät (Antworter) durch den Abfrager ausgelöst werden. Diese Funktionen können abhängig von den empfangenen Signalen bzw. deren Kodierung verschieden sein. Damit wird insbesondere die Identifizierung - beispielsweise zur Freund- Feind- Erkennung - in einfachster Art und Weise ermöglicht. Mit Sensoren, die zudem die Fähigkeit besitzen, die Richtung der Interrogation zu erkennen, können Emissionen am Antworter- gezielt in Richtung der Abfrage ausgesandt werden. Damit wird die Gefahr des ungewollten Entdeckens deutlich reduziert. Es versteht sich, dass auch Funksignale zumindest unterstützend zu den Laser- und Lichtstrahlen nutzbar sind.

Die Abfrage selbst kann auf jede erdenkliche Art und Weise ausgelöst werden: beispielsweise durch Schalter an / in der Hand, Arm oder Mund, auch akustisch oder durch eine Detektion von einer Bewegung des Körpers oder von Körperteilen, wie beispielsweise der Augenlider. Dazu ist beispielsweise ein Sensor eingebunden, der ein bewusstes Augenschließen - nicht hingegen nur ein leichtes Zucken - detektieren und auswerten kann. Die Abfrage kann sowohl permanent als auch nur kurzfristig betrieben werden.

Als Abfrager vorgesehen ist ein möglichst kleines und leichtes Gerät bzw. eine möglichst kleine und leichte Vorrichtung, welche an Körper, Kleidung oder Kopfbedeckung der Person angebracht die bereits beschriebenen Aufgaben bezüglich Entfernungsmessungen, Identifizierungen, Zielmarkierungen, Zielbeleuchtungen etc. als auch der optischen Informationsübertragung zwischen den Einsatzkräften übernehmen kann. Das hat unter anderem den Vorteil, dass das auf das Ziel erfolgte Richten unbemerkt ablaufen kann, da die Zielmittel bzw. das Gerät als solche nicht unmittelbar erkennbar sind.

Die Vorrichtung des Abfragers bzw. des Gerätes kann unter anderem an einem Helm oder Stirnband angebracht und durch Drehen des Kopfes auf ein Objekt gerichtet werden. Derartige Anbringungen sind bereits für Taschenlampen bzw. Leuchten bekannt. Auch kennt man Head Mounted Displays zur Darstellung von Informationen aus z.B. Kameras. und / oder zur Durchsicht mit gleichzeitiger Einblendung von Informationen.

Alternativ zum Helm oder Stirnband kann das Gerät / die Vorrichtung Abfrager am Oberkörper, vorzugsweise im Schulterbereich angebracht werden, sodass dann eine Ausrichtung des Gerätes durch Drehung des Oberkörpers auf ein Ziel erfolgt. Eine Weste für ein audiovisuelles System kennt der Anwender beispielsweise aus der DE 20 2007 016 525 U1. Dies nutzend ist das Gerät bzw. die Vorrichtung vorzugsweise im Schulterbereich bzw. an der Schulter selbst anzubringen. Auch andere Anbringungsorte sind denkbar.

Die mit dem Gerät Abfrager ermittelten Informationen, wie gemessene Entfernung oder Identifikation etc., können dem Benutzer direkt signalisiert und / oder gespeichert und / oder an andere Geräte übermittelt werden.

Ist zudem ein Sensor zur Winkelbestimmung vorhanden und mit einem Display oder Signalgeber gekoppelt, können ermittelte / gespeicherte Informationen abhängig von der Drehung des Gerätes - Kopf, (Ober-) Körper des Bedieners - aus dem Speicher dargestellt werden.

In einer weiteren bevorzugten Ausführung wird ein Verblassen lassen oder Ausblenden der Informationen automatisch veranlasst, wenn diese Informationen älteren Zeitranges sind oder sich die Position oder Status des Abfragers und / oder des Zielobjektes geändert hat.

Das vorgeschlagene Sichtmittel und / oder die Zielvorrichtung mit Emitter ermöglicht in einer vorteilhaften Art und Weise nunmehr auch die Trennung von Waffe und Zieleinrichtung, sodass ein Zielen nicht automatisch ein Ausrichten der Handfeuerwaffe bedeutet. Das reduziert empörende, eskalierende, feindliche, schreckhafte und / oder ähnlichen Reaktionen seitens der mit der Waffe anvisierten Personen.

Anhand eines Ausführungsbeispiels mit skizzenhafter Darstellung in den Zeichnungen soll die Lösung näher erläutert werden. Es zeigt:
- Fig. 1: eine erste Variante der Einbindung eines Zielmittels,
- Fig. 2: eine weitere Variante der Einbindung des Zielmittels,
- Fig. 3: ein mögliches Szenario,
- Fig. 4: eine Gegenstelle für das Identifizieren und / oder Kommunizieren mit den Sichtmittel und / oder die Zielvorrichtungen aus Fig. 1 oder 2.

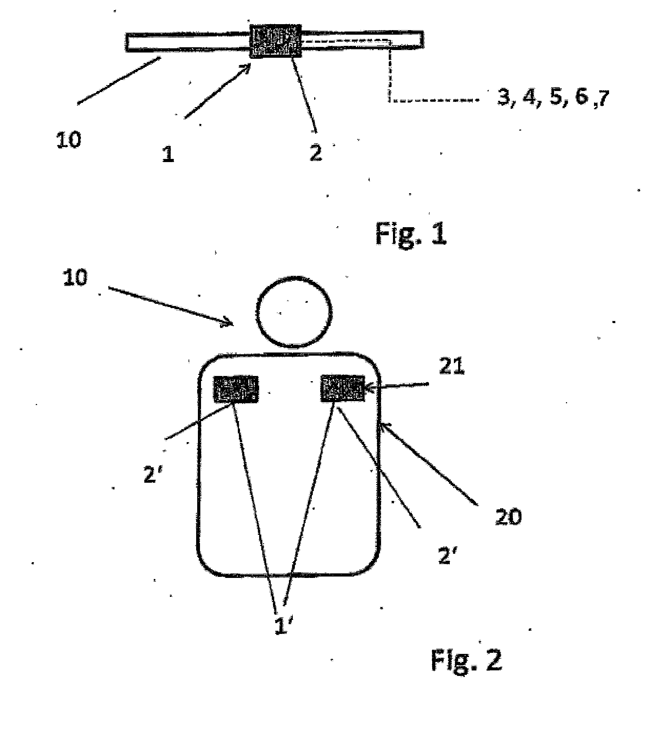

In Fig. 1 ist eine Vorrichtung 1 dargestellt, die in einem Gehäuse 2 untergebracht ist. Die Vorrichtung 1 umfasst wenigstens ein Visier 3 und / oder einen Zielmarkierer 4 und / oder einen Zielbeleuchter 5 und / oder einen Emitter 6 zur Identifikation und / oder einen Entfernungsmesser 7. Das Gehäuse 2 ist dabei an einem Stirnband oder dergleichen befestigt. Alternativ ist die Einbindung an einem Helm (nicht näher dargestellt) möglich.

Fig. 2 zeigt die Vorrichtung 1', die ebenfalls in einem Gehäuse (nicht näher dargestellt) oder aufgeteilt in mehreren Gehäusen 2' aufgenommen ist. Diese umfassen dann die entsprechenden, in Fig. 1 genannten Komponente(n) (3 - 7). Da eine Bedienperson 10 im Einsatz in der Regel neben einem Helm auch eine Trageweste 20 (angedeutet) anhat, bietet sich der Einbau bzw. die Einbindung der Vorrichtung 1' in die Weste 20 an, insbesondere im Schulterbereich 21. Die Weste 20 kann dann auch zur Aufnahme der für den optischen Empfang und für die Antwort benötigten Geräte dienen, sowie der notwendigen Energieversorgung.

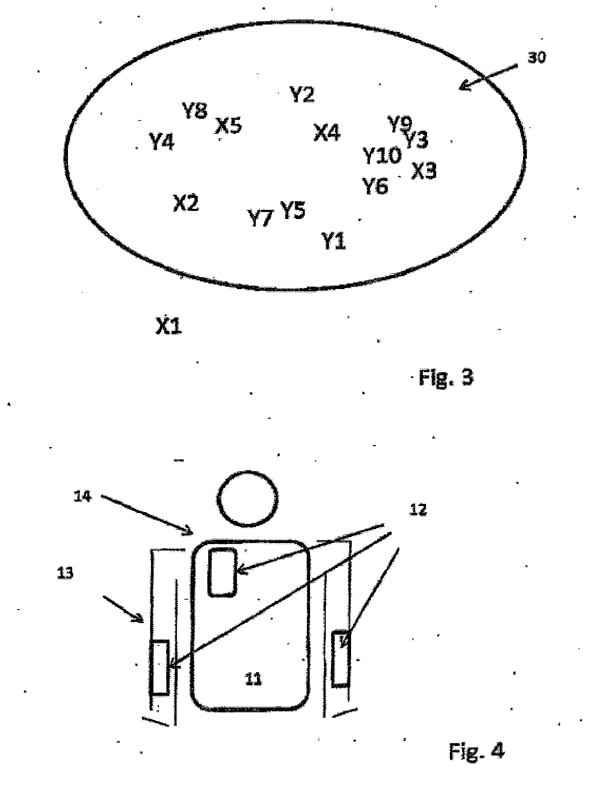

Jede den Mitgliedern zugehörige Person X1- X5 (Fig. 3) besitzt, bevorzugt ebenfalls am Körper 11 verteilt, Mittel 12 zur Informationsübertragung (Fig. 4). Diese können auch an Armen 13 und Beinen etc. (nicht näher dargestellt) der anderen Person 14 eingebunden werden).

Die Funktionsweise kann in einfacher Art wie folgt beschrieben werden:

Eine im Einsatz befindliche Person 10, in Fig.3 angedeutet mit "X1", orientiert sich im Gebiet 30, um Mitglieder"X2-X5" und alternativ Nichtmitglieder, wie Fremdpersonen oder Fremdfahrzeuge "Y1-Y10" festzustellen und deren Zuordnung zu ermitteln. Dazu verwendet sie Sichtmitteln und / oder Zielvorrichtungen mit Emitter 3-7. Ein Emitter kann angebracht, gekoppelt oder integriert sein mit z. B. Ziel- oder Beleuchtungslasern und / oder Ferngläsern und / oder Waffen und / oder Kameras und / oder Wärmebildgeräten und / oder Restlichtverstärkern.- Es versteht sich, dass nicht nur die Person X1 sondern jedes Mitglied "X1-X5" eine Vorrichtung 1 mit eigenen Sichtmitteln und / oder Zielvorrichtungen mit Emitter 3-7 besitzen kann.

Eine Person "X1" sucht den Bereich 30 ab und richtet ihre Vorrichtung 1, 1' mit den optischen Sichtmitteln und / oder Zielvorrichtungen mit Emitter 3-7 auf einzelne oder alle Objekte X2-X5 sowie Y1-Y10. Damit lassen sich die Objekte X2-X5 und Y1-Y10 einfach und sicher anpeilen.

Dazu wird ein bevorzugt kodierter Laser des Abfragers X1 auf die Objekte X2-X5 sowie Y1-Y10 gerichtet. Dabei tragen die Objekte X1-X5 der Kommunikationsgruppe den Empfänger 15 und das Übertragungssystem 12 (Antworter), während die anderen nicht zur Kommunikationsgruppe gehörenden Objekte Y1-Y10 damit nicht ausgerüstet sind.

Treffen die emittierten optischen Signale auf einen für die Signale oder Daten geeigneten Empfänger, werden bei diesem Informationen signalisiert und / oder Aktionen ausgelöst. Der optische Emitter kann die ausgesendeten Daten oder Signale so gestalten, dass damit spezielle Informationen signalisiert und / oder spezielle Aktionen beim Antworter ausgelöst werden.

Der optische Emitter (Abfrager) kann so gestaltet oder mit einem Gerät kombiniert sein, dass die beim Empfänger aktivierten Signale wieder empfangen, signalisiert und / oder Aktionen damit ausgelöst werden.

Der Laserstrahl eines Abfragers X1 kann eine Kodierung enthalten, mit der die Antwort des Übertragungssystems 12 entsprechend dem Frequenzbereich des optischen Sichtmittels und / oder Zielvorrichtung 3-7 ausgelöst wird, damit das im für das optische Sichtmittel und /oder Zielvorrichtung 3-7 sichtbaren Frequenzbereich antwortende Übertragungssystem erkannt werden kann. Ein IR-Zielmittel würde beispielsweise die Antwort im IR-Bereich anfordern, ein Zielmittel im sichtbaren Bereich die Antwort im sichtbaren Bereich.

Zur Identifizierung von Objekten X1-X5 (14) und Kommunikation mit diesen kann das vorgenannte Gerät bzw. die vorgenannte Vorrichtung 1, 1' in Einsätzen von Polizei als auch Soldaten verwendet werden. Ein weiterer Einsatzbereich sind andere beispielsweise auf zulässige Personen zu überwachende sensible Bereiche, wie Flugplätze, Kernkraftanlagen, etc.

## Patentansprüche

1. Vorrichtung (1, 1'), die mit zumindest einem Sichtmittel oder einer Zielvorrichtung (3-7) auf ein Zielobjekt (14, X1-X5, Y1-Y10) gerichtet werden kann, um damit Entfernungsmessungen, Datenübertragungen, Identifizierungen, Zielmarkierungen, Zielbeleuchtungen und / oder dergleichen durchzuführen, **dadurch gekennzeichnet, dass** selbige Sicht- / Zielmittel (3-7) auch zur Kommunikation mit dem Zielobjekt (14, X1-X5) dienen.

2. Vorrichtung nach Anspruch 1, **dadurch gekennzeichnet, dass** sie Funktionen am Zielobjekt (14, X1-X5) auslöst und / oder auch mittels kodierten Laser- und / oder Lichtsignalen Sprache oder Daten übermitteln kann.

3. Vorrichtung nach Anspruch 1 oder 2, **dadurch gekennzeichnet, dass** sie an einem Helm, einem Stirnband, im Schulterbereich (21) und / oder einer entsprechenden geeigneten Stelle zur Kommunikation mit dem Zielobjekt (14, X1-X5) am Körper eingebunden ist.

4. Vorrichtung nach Anspruch 3, **dadurch gekennzeichnet, dass** sie in einer Weste (20) eingebunden ist.

5. Vorrichtung nach einem der Ansprüche 1 bis 4, **dadurch gekennzeichnet, dass** das wenigstens eine Zielmittel (3-7) wenigstens ein Entfernungsmesser (3), ein Zielmarkierer (4), ein Zielbeleuchter (5) und / oder ein Emitter zur Identifikation (6) etc. sind, die auch in Kombinationen verwendet werden können.

6. Vorrichtung nach einem der Ansprüche 1 bis 5, **dadurch gekennzeichnet, dass** sie in einem oder mehreren Gehäusen (2, 2') untergebracht ist.

7. Vorrichtung nach einem der Ansprüche 1 bis 6, **dadurch gekennzeichnet, dass** die Funktionsauslösung an der Vorrichtung (1, 1') beispielsweise durch Schalter an / in der Hand, Arm oder Mund erfolgt.

8. Vorrichtung nach einem der Ansprüche 1 bis 6, **dadurch gekennzeichnet, dass** die Funktionsauslösung an der Vorrichtung (1, 1') beispielsweise akustisch oder durch eine Detektion von einer Bewegung des Körpers oder von Körperteilen, wie beispielsweise der Augenlider, erfolgt.

9. Vorrichtung nach einem der Ansprüche 1 bis 8, **dadurch gekennzeichnet, dass** die mit der Vorrichtung (1, 1') ermittelten Informationen, wie gemessene Entfernung oder Identifikation, dem Benutzer direkt signalisiert und / oder gespeichert und / oder an andere Geräte übermittelt werden können.

10. Vorrichtung nach einem der Ansprüche 1 bis 9, **dadurch gekennzeichnet, dass** ein Sensor zur Winkelmessung eingebunden ist.

11. Vorrichtung nach einem der Ansprüche 1 bis 10, **dadurch gekennzeichnet, dass** ermittelte Entfernungs- und Identifikationsinfiormationen abhängig von der Drehung des entsprechenden Körperteils auf einem Display dargestellt werden können.

12. Verfahren zur Kommunikation mit einem Zielobjekt (14, X1-X5) mittels zumindest einem Sichtmittel oder einer Zielvorrichtung (3-7), das auf ein Zielobjekt (14, X1-X5, Y1-Y10) gerichtet werden kann, um damit Entfernungsmessungen, Datenübertragungen, Identifizierungen, Zielmarkierungen, Zielbeleuchtungen und / oder dergleichen durchzuführen, **gekennzeichnet durch** die Schritte:
● anpeilen der Zielobjekte (14, X1-X5) sowie von Nichtzielobjekte (Y1-Y10) mittels der Sicht-/ Zielvorrichtung (3.7),
● signalisieren von Informationen und / oder auslösen von Aktionen am Zielobjekt (14, X1-X5) mittels optischer Signale.

13. Verfahren nach Anspruch 12, **dadurch gekennzeichnet, dass** die ausgesendeten Daten oder Signale so gestaltet sind, dass damit spezielle Informationen signalisiert und / oder spezielle Aktionen beim Zielobjekt (14, X1-X5) ausgelöst werden.

14. Verfahren nach Anspruch 12 oder 13, **dadurch gekennzeichnet, dass** die Sichtmittel /die Zieleinrichtung (3-7) so gestaltet oder mit einem Gerät kombiniert ist, dass die beim Zielobjekt (14, X1-X5) aktivierten Signale wieder empfangen, signalisiert und /oder die Aktionen damit ausgelöst werden.

15. Verfahren nach einem der Ansprüche 12 bis 14, **dadurch gekennzeichnet, dass** die optischen Signale eine Kodierung enthalten, mit der die Antwort des Übertragungssystems (12) entsprechend dem Frequenzbereich des optischen Sichtmittels und /oder Zielvorrichtung (3-7) ausgelöst wird, damit das im für das optische Sichtmittel und / oder Zielvorrichtung (3-7) sichtbaren Frequenzbereich antwortende Übertragungssystem (12) erkannt werden kann.
